# EUROPEAN PATENT APPLICATION

(11) **EP 4 366 113 A1**
(43) Date of publication of application: **08.05.2024**
(21) Application number: 21947382.4
(22) Date of filing: 28.06.2021
(51) Int. Cl.: H02J 7/00

(54) **BATTERY SYSTEM AND EQUALIZATION MANAGEMENT METHOD THEREFOR**

(71) Applicant: Envision Energy Co., Ltd., Jiangyin Wuxi Jiangsu 214443 (CN)
(72) Inventor: ZENG, Wei, Wuxi, Jiangsu 214443 (CN); WEN, Jin, Wuxi, Jiangsu 214443 (CN)
(74) Representative: Becker, Eberhard
(86) International application number: PCT/CN2021/102633
(87) International publication number: WO 2023/272416

(57) **Abstract**

A battery system, comprising several battery clusters connected in parallel. Each battery cluster is connected to a power conversion system by means of a battery bus; and any one battery cluster comprises several battery packs connected in series, and further comprises: pack equalizers, which correspond to the battery packs on a one-to-one basis, wherein a first end of each pack equalizer is connected to two ends of a corresponding battery pack, and a second end thereof is connected to a power source; and a cluster equalizer, a first end of the cluster equalizer being connected in series to the battery packs, and a second end thereof being connected to the power source. According to the battery system, the pack equalizer is used between the battery packs to adjust the equalization of the battery packs in each cluster; in addition, each battery cluster is connected to the cluster equalizer to realize equalization adjustment of the battery cluster. Thus, the battery system has the advantages of low cost, small size, light weight and low loss. The present invention further relates to an equalization management method for the battery system.

## Description

### FIELD OF TECHNOLOGY

The present invention relates to the field of new energy technologies, and in particular to a battery system and an equalization management method.

### BACKGROUND

Due to the low nominal voltage of the battery monomer, in practical applications, in the fields such as photovoltaics, energy storage, new energy electric vehicles, multiple series-connected battery packs are usually required to form battery clusters, so as to meet different voltage requirements. In some fields, multiple battery clusters are also connected in parallel, eventually forming a battery system.

However, because of the inconsistency of the monomer performances of each battery pack, the battery packs may have inconsistent states of charge or terminal voltages during use. Charging is stopped necessarily as soon as one battery pack is charged fully or reaches the charge cut-off voltage, and discharging is stopped necessarily as soon as one battery pack is discharged completely or reaches the discharge cut-off voltage. As the number of charge and discharge cycles increases, the imbalance between the battery packs gradually intensifies. This gradually reduces the charge and discharge capacity of the battery clusters and eventually causes the battery system to be obsolete in advance, greatly affecting the service life of the battery modules. Therefore, battery equalization technology is crucial.

Currently, most of the battery equalization schemes commonly used in battery systems are only for inter-cluster equalization or pack equalization. For example, in the parallel-type full-power cluster DCDC scheme, inter-cluster equalization can be achieved, but high-voltage semiconductor devices are used necessarily, which leads to high costs, heavy weights, and large volumes. In addition, the use of a low-power pack DCDC scheme to form a cluster equalization bus can satisfy equalization of battery packs, but cannot implement inter-cluster equalization.

If implementations of both inter-cluster equalization and pack equalization are required, both full-power cluster DCDC and low-power pack DCDC need to be configured simultaneously, which is costly.

### SUMMARY

In terms of some or all problems in the related art, an aspect of the present invention provides a battery system, including a plurality of parallel-connected battery clusters, where the battery cluster is connected to a power conversion system via a battery bus, and any one of the battery clusters includes:
a plurality of series-connected battery packs;
pack equalizers, in one-to-one correspondence with the battery packs, each having a first end connected to two terminals of a corresponding battery pack and a second end connected to a second end of a cluster equalizer; and
cluster equalizers each having a first end connected to the battery pack in series and a second end connected to a power source.

Further, the power source is a grid or a generator.

Further, the power source is a battery or a supercapacitor.

Further, the power source is a current cluster of batteries.

Further, when the power source is the current cluster of batteries, in any one of the battery clusters, the second end of the pack equalizer is correspondingly connected to the second end of the cluster equalizer.

Further, the cluster equalizer includes a first DCDC circuit and a battery-cluster power-distribution device.

Further, the pack equalizer includes a second DCDC circuit and a battery-pack power-distribution device.

Further, a bidirectional boost/buck or buck-boost circuit is used as the first DCDC circuit.

Further, an isolated dual-active bridge circuit, a series resonant circuit, or an LLC circuit is used as the second DCDC circuit.

Further, the battery system further includes a control module, including:
a power detection apparatus configured to measure states of charge of each battery pack and battery cluster; and
a controller configured to determine charge and discharge logic of the pack equalizer and cluster equalizer according to the state of charge of the battery pack and/or the battery cluster.

Another aspect of the present invention provides an equalization management method of battery system, including:
controlling, during charging, a cluster equalizer to absorb power from a battery bus via a first end of the cluster equalizer, and controlling the pack equalizer to absorb power from a second end of the cluster equalizer and sending the power to the battery pack; and
controlling, during discharging, a pack equalizer to absorb power from a battery pack via a first end of the pack equalizer; and controlling the cluster equalizer to absorb power from a second end of the pack equalizer and sending the power to the battery bus.

According to the battery system and an equalization management method thereof provided by the present invention, the pack equalizers are provided between the battery packs to regulate the equalization between battery packs in each cluster, and cluster equalizers are connected to the battery clusters to regulate the equalization between the battery clusters. The use of such equalization scheme allows for low voltage of the cluster equalizer and the current is cluster current, and therefore, functions can be implemented by using small power DCDC circuits of low voltage semiconductor devices. Compared with the high voltage DCDC in the related art, the low power DCDC features low cost, small size, light weight, and low loss. In such case, based on the similar principle, the pack equalizer is also a low-power DCDC formed by low-voltage semiconductor devices, which features low cost, small size, light weight, and low loss. In addition, the battery system only needs to boost the voltage of the cluster equalizer, so as to increase the Vbus voltage of the power conversion system, which in turn enables it to operate at a higher grid voltage and increases the power of the power conversion system.

### BRIEF DESCRIPTION OF THE DRAWINGS

To further describe the above and other advantages and features of the various embodiments of the present invention, a more specific description of the various embodiments of the present invention will be presented with reference to the accompanying drawings. It can be understood that these accompanying drawings are used for describing only typical embodiments of the present invention and will therefore not be considered as limitations on the scope thereof. In the accompanying drawings, same or corresponding parts are denoted by the same or similar numerals for clarity.
FIG. 1 is a schematic structural diagram of a battery system according to an embodiment of the present invention.
FIGs. 2a to 2e are schematic diagrams of various topological patterns of a pack equalizer.
FIGs. 3a to 3g are schematic diagrams of various topological patterns of a cluster equalizer power source.
FIG. 4 is a schematic diagram of a topological pattern of a battery system according to an embodiment of the present invention.
FIGs. 5a to 5d are schematic diagrams of a current flow of a DCDC circuit in a charge and discharge mode according to an embodiment of the present invention.
FIGs. 6a to 6d are schematic diagrams of a current flow of a DCDC circuit in a charge and discharge mode according to another embodiment of the present invention.

### DESCRIPTION OF THE EMBODIMENTS

In the following description, the present invention is described with reference to the various embodiments. However, those of skill in the related art will recognize that embodiments may be implemented without one or more specific details or other replacement and/or additional methods, materials, or components. In other cases, well-known structures, materials, or operations are not shown or described in detail so as not to obscure the inventive point of the present invention. Similarly, for purposes of explanation, specific quantities, materials, and configurations are set forth in order to provide a comprehensive understanding of embodiments of the present invention. However, the present invention is not limited to these particular details. In addition, it should be understood that the embodiments illustrated in the accompanying drawings are illustrative and not necessarily drawn to the correct scale.

In this specification, a reference to "an embodiment" or "this embodiment" means that a particular feature, structure, or characteristic described based on the embodiment is included in at least one embodiment of the present invention. The phrase "in an embodiment" appearing throughout this specification does not necessarily refer to the same embodiment in its entirety.

It should be noted that the embodiments of the present invention describe the process steps in a particular order, however, this is only for describing the particular embodiment and not to limit the sequence of the steps. On the contrary, in different embodiments of the present invention, the sequence of the steps can be adjusted according to the regulation of the process.

In the existing battery equalization scheme, cluster equalization is usually implemented using a high-voltage DCDC, and the DCDC is connected to the battery clusters in parallel. After a full-power conversion, and outputting is performed to the battery bus. The full-power DCDC has a high power, and thus semiconductor devices selected as required have high pressure, large size, heavy weight, and large loss. In addition, if the pack equalization is further required, an additional low-power pack DCDC needs to be configured, further increasing the overall costs of the battery system. To address the foregoing problems, the inventor, through research, has discovered that the cluster equalizers are connected to the battery packs in the battery clusters in series, which allows equalization regulation only by a DCDC circuit formed by low-voltage semiconductor devices. Based on this, the present invention first provides a battery system that uses low-voltage semiconductor devices to implement a DCDC circuit, enabling the entire system to simultaneously achieve cluster equalization and pack equalization. The solution of the present invention is further described below with reference to the accompanying drawings of the embodiments.

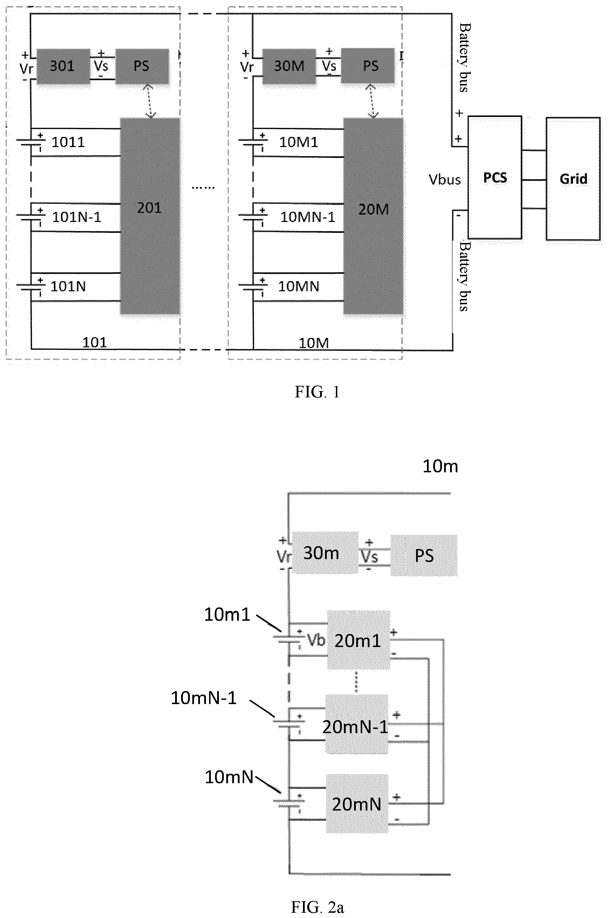

FIG. 1 is a schematic structural diagram of a battery system according to an embodiment of the present invention. As shown in FIG. 1, a battery system includes a plurality of parallel-connected battery clusters 101, ..., and 10M. The two ends of each battery cluster are respectively connected to the positive and negative electrodes of Vbus terminals of a power conversion system (PCS) via a battery bus+ and a battery bus-, and then connected to a grid.

As shown in FIG. 1, any one of the battery clusters 10m includes a plurality of series-connected battery packs 10m1, ..., 10mN-1, and 10mN, along with pack equalizers 20m and cluster equalizers 30m, m being any natural number between 1 and M. The first end of the pack equalizer 201 is connected to the two terminals of each battery pack, while the second end is connected to the power source PS. The pack equalizer is configured to regulate the equalization between the battery packs 10m1, ..., 10mN-1, and 10mN within the cluster. The first end of the cluster equalizer 30m is connected to the battery pack in series, while the second end is connected to the power source PS of each battery cluster. Together with cluster equalizers of other battery clusters, it can achieve the equalization regulation of the battery clusters 101, ..., and 10M.

In an embodiment of the present invention, in order to implement better equalization management of the battery system, the battery system further includes a control module. The control module is mainly configured to determine the charge and discharge logic of the pack equalizer and cluster equalizer. Specifically, the control module includes:
a power detection apparatus configured to measure states of charge of each battery pack and battery cluster; and
a controller configured to determine charge and discharge logic of the pack equalizer and cluster equalizer according to the state of charge of the battery pack and/or the battery cluster.

In this embodiment of the present invention, in order to achieve equalization regulation, bidirectional converters are used for both the cluster equalizer and pack equalizer.

Any one of the battery clusters 10m may include one or more of the pack equalizers 20m. In an embodiment of the present invention, any one of the battery clusters 10m includes N pack equalizers: 20m1, ..., 20mN-1, and 20mN, which are in one-to-one correspondence with the battery packs 10m1, ..., 10mN-1, and 10mN. Specifically, the positive and negative electrodes of the first end of the pack equalizer 20mn are connected to the positive and negative electrodes of the battery pack 10mn, respectively, m representing any natural number between 1 and M, and n representing any natural number between 1 and N.

For a battery cluster formed by multiple series-connected battery packs, the pack equalization can be implemented in multiple manners. FIGs. 2a to 2e are schematic diagrams of various topological patterns of a pack equalizer. The main difference among various schemes lies in the connection manner of the second end of the pack equalizer.

As shown in FIG. 2a, in any one of the battery clusters 10m, the positive and negative electrodes of the second end of any pack equalizer 20mn are correspondingly connected to the positive and negative electrodes of the second end of the other pack equalizers within the cluster. In this embodiment, the power source of the cluster equalizer may be a grid, a generator, a battery, or a supercapacitor.

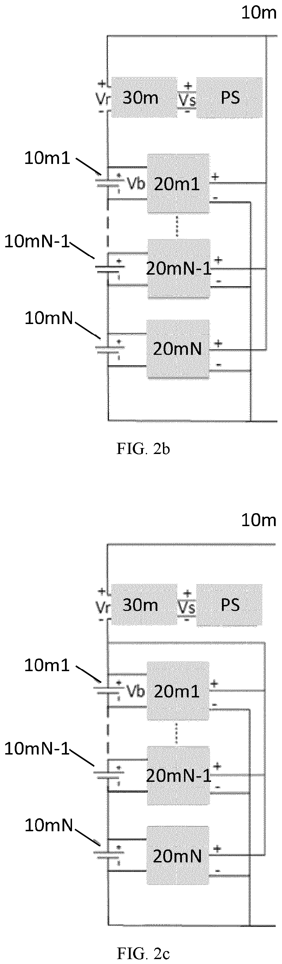

As shown in FIG. 2b, in any one of the battery clusters 10m, the positive and negative electrodes of the second end of any pack equalizer 20mn are respectively connected to the battery bus+ and the battery bus-. In this embodiment, the power source of the cluster equalizer may be a grid, a generator, a battery, or a supercapacitor.

As shown in FIG. 2c, in any one of the battery clusters 10m, the positive electrode of the second end of any pack equalizer 20mn is connected to the positive electrode of the battery pack 10m1 and the negative electrode is connected to the battery bus-. In this embodiment, the power source of the cluster equalizer may be a grid, a generator, a battery, or a supercapacitor.

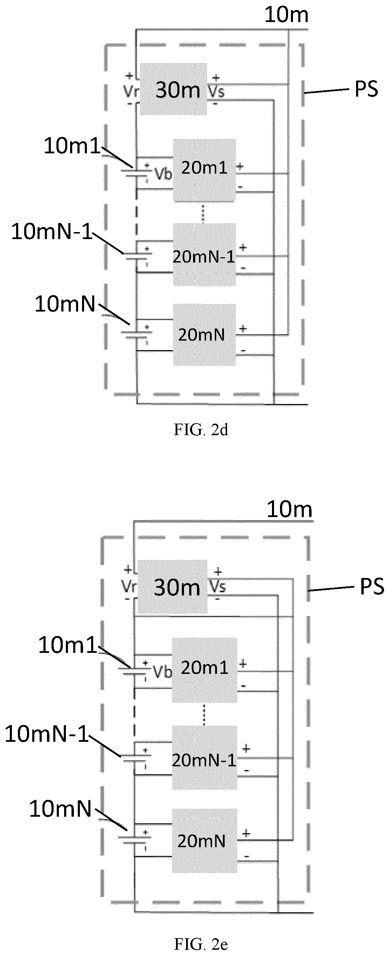

As shown in FIG. 2d, in any one of the battery clusters 10m, the positive and negative electrodes of the second end of any pack equalizer 20mn are connected to the battery bus+ and the battery bus-. In addition, the positive and negative electrodes of the second end of any one of the pack equalizers 20mn are further correspondingly connected to the positive and negative electrodes of the second end of the cluster equalizer, so as to be used as the power source.

As shown in FIG. 2e, in any one of the battery clusters 10m, the positive electrode of the second end of any pack equalizer 20mn is connected to the positive electrode of the battery pack 10m1, and the negative electrode is connected to the battery bus-. In addition, the positive and negative electrodes of the second end of any one of the pack equalizers 20mn are further correspondingly connected to the positive and negative electrodes of the second end of the cluster equalizer, so as to be used as the power source.

It should be understood that the cluster equalizer 30M may be connected in series in any position of the cluster via its first end, which is not limited to the example of connection close to the battery bus+ in FIG. 1. For example, the cluster equalizer may be further connected close to the battery bus- or between adjacent battery packs. Specifically, the method for connection close to the battery bus- includes: connecting the positive electrode of the first end of the cluster equalizer 30M to the negative electrode of the battery pack 10MN, and connecting the negative electrode to the battery bus-. The method for connection between two adjacent battery packs includes: respectively connecting the positive and negative electrodes of the first end of the cluster equalizer 30M to the negative electrode and the positive electrode of the two adjacent battery packs.

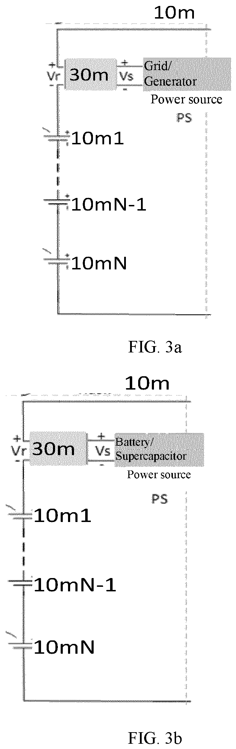

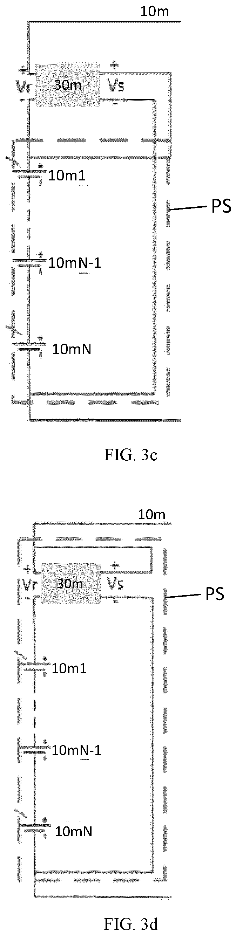

The power source PS is connected to the second end of the cluster equalizer through the cluster equalization bus Vs. FIGs. 3a to 3g are schematic diagrams of various topological patterns of a cluster equalizer power source. As shown in FIG. 3a, the second end of the cluster equalizer can be directly connected to the grid or a generator, where the grid or generator may be considered as the power source PS. As shown in FIG. 3b, the second end of the cluster equalizer may further be connected to a battery or supercapacitor, where the battery or supercapacitor may be considered as the power source PS. In addition, a current cluster of batteries may also be considered as the power source PS. FIGs. 3c to 3g show some topological patterns with the current cluster of batteries used as the power source.

As shown in FIG. 3c, in any one of the battery clusters 10m, the positive electrode of the second end of the cluster equalizer 30m is connected to the positive electrode of the battery pack 10m1, and the negative electrode is connected to the negative electrode of the battery pack 10mN. In this embodiment, the power source is N series-connected battery packs.

As shown in FIG. 3d, in any one of the battery clusters 10m, the positive electrode of the second end of the cluster equalizer 30m is connected to the positive electrode of the first end of the cluster equalizer 30m, and the negative electrode is connected to the negative electrode of the battery pack 10mN. In this embodiment, the power source is N series-connected battery packs and the cluster equalizer.

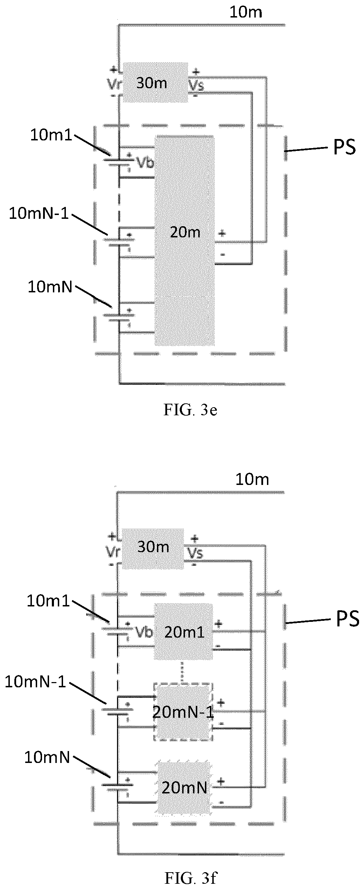

In addition, the voltage of the battery pack that has been equalized by the pack equalizer may be also used as the power source. As shown in FIG. 3e, in any one of the battery clusters 10m, the positive and negative electrodes of the second end of the cluster equalizer 30m are respectively connected to the positive and negative electrodes of the second end of the pack equalizer 20m. In this embodiment, the power source is the voltage, of N series-connected battery packs, regulated by the pack equalizers. It should be understood that in an embodiment of the present invention, multiple pack equalizers are provided in one-to-one correspondence with the battery packs. Therefore, as shown in FIG. 3f, the positive and negative electrodes of the second end of the cluster equalizer 30m may be connected to the positive and negative electrodes of one or more of the pack equalizers, and thus the equalized voltage of the one or more series-connected battery packs is used as the power source.

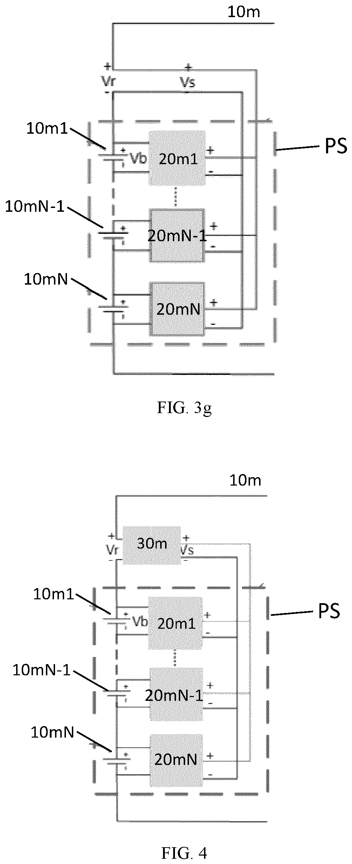

As shown in FIG. 3g, the voltage, of N series-connected battery packs, regulated by the pack equalizers may also be directly used as the cluster voltage Vr.

In order to minimize the overall size and weight of the battery system, in the embodiments of the present invention, preferably, the current cluster of batteries is used as the power source. In addition, a preferable topological pattern can be obtained through the comprehensive consideration of the pack equalization. FIG. 4 is a schematic diagram of a topological pattern of a battery system according to an embodiment of the present invention. As shown in FIG. 4, the current cluster of batteries is used as the power source for the cluster equalizer of the battery system. Specifically, the connected-parallel voltage equalized by the pack equalizer is used as the power source. In any one of the battery cluster 10m, the positive and negative electrodes of the second end of each pack equalizer are both connected to the positive and negative electrodes of the cluster equalizer 30m. In addition, as shown in FIG. 4, in any one of the battery clusters 10m, the cluster equalizer includes a first DCDC circuit 300 and a battery-cluster power-distribution device (not shown in the figure), and the pack equalizer includes a second DCDC circuit 200 and a battery-pack power-distribution device (not shown in the figure). A bidirectional boost/buck or buck-boost circuit is used as the first DCDC circuit, for example, the bidirectional half-bridge non-isolated buck DCDC and bidirectional half-bridge non-isolated boost DCDC.

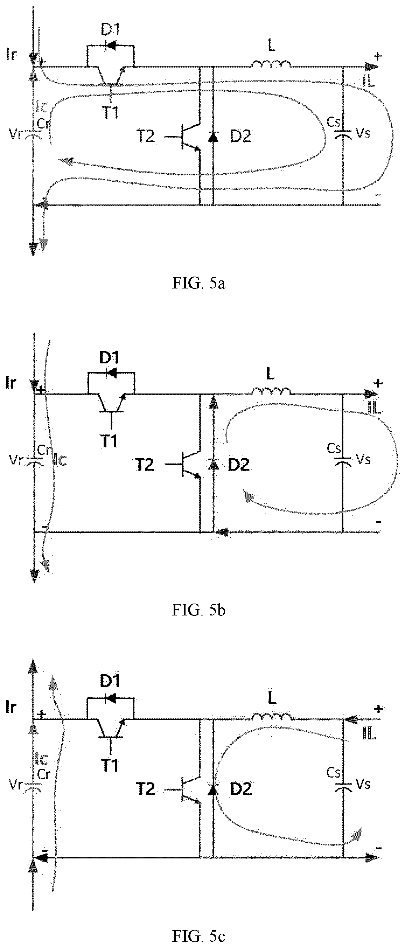

FIGs. 5a to 5d are schematic diagrams of a current flow of a DCDC circuit in a charge and discharge mode according to an embodiment of the present invention. As shown in the figure, the first DCDC circuit may be of a buck structure, including N-MOS transistors T1 and T2, capacitors Cr and Cs, inductor L, and diodes D1 and D2.

In the charge mode, T2 is turned off, as shown in FIG. 5a, and when the battery system starts charging, T1 is turned on. In this case, with the anode voltage of D2 lower than the cathode voltage, it is turned off reversely. And, the cluster current Ir flows through the inductor L towards the load, that is, the pack equalizer, for supplying power. The current IL in the inductor L gradually increases by ΔIL. The change value in inductor current satisfies the following formula: L*ΔIL = (Vr - Vs)*Ton, where the self-induced potential generated across two ends of L impedes the current increase, making L convert electrical energy into magnetic energy and store it. Furthermore, when the capacitor Cr is in a charging state, the voltage gradually increases by ΔUc. This helps reduce voltage ripple. The change value in capacitor voltage satisfies the following formula: C *ΔUc = Ic*Ton, where Ic = IL-Ir. After the time of Ton, the transistor T1 is turned off. As shown in FIG. 5b, the self-induced potential generated across two ends of the inductor impedes the current decrease, enabling D2 to be forward biased and turned on. This allows the current in the inductor to flow through D2, thus forming a loop. The current gradually decreases, and its change value satisfies the following formula: L*ΔIL = Vs*Toff. The stored magnetic energy is converted into electrical energy and released to the load. In this case, the cluster current Ir directly flows through the capacitor Cr towards the battery pack or battery bus. The capacitor is in a discharging state, and Ic = Ir. The change value of voltage of the capacitor satisfies: C*ΔUc = Ir*Toff. After the time Toff, T1 is turned on again. The foregoing process is repeated until the equalization of the battery clusters is implemented during charging. Theoretically, during the turn-off and turn-on of the transistor T1, the change values about the increase and decrease of the inductor current should be the same, that is, (Vr - Vs)*Ton = Vs*Toff, and the values about the increase and decrease of the capacitor voltage should also be the same, that is, Ic*Ton= Ir*Toff. Therefore, during charging, the cluster equalization voltage Vs = D*Vr and the cluster current Ir = D*IL can be obtained, where D = Ton/(Ton+Toff).

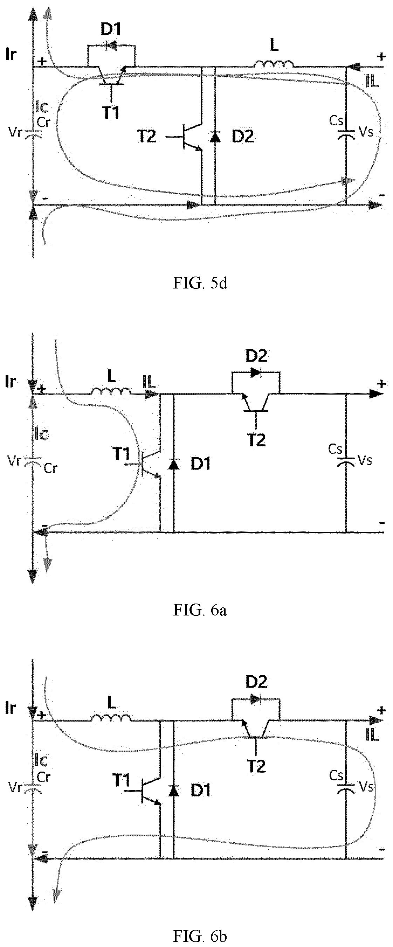

In the discharge mode, T1 is turned off, as shown in FIG. 5c, and when the battery system starts charging, T2 is turned on. In this case, with the anode voltage of D1 lower than the cathode voltage, it is turned off reversely. And, the discharge current of the battery, in this embodiment of the present invention, refers to the current of the battery packs equalized by the pack equalizer, flowing through the inductor L and T2 to form a loop. The current IL in the inductor L gradually increases by ΔIL, and the change value in inductor current satisfies the following formula: L*△IL=Vs*Ton, where the self-induced potential generated across two ends of L impedes the current increase, making L convert electrical energy into magnetic energy and store it. Furthermore, the capacitor Cr is in a charging state, the voltage gradually increases by ΔUc, and the change value in inductor voltage satisfies the following formula: C *ΔUc = Ic*Ton. In this case, D1 is turned off, and the cluster current Ir, after directly flowing through the capacitor, enters the battery pack or battery bus, so Ic = Ir. After the time Ton, the transistor T2 is turned off. As shown in FIG. 5d, the self-induced potential generated across two ends of the inductor impedes the current decrease, enabling D1 to be forward biased and turned on. This allows the current in the inductor to flow into the battery pack or battery bus via D1. The current gradually decreases, and its change value satisfies the following formula: L*△IL= (Vr-Vs) *Toff. The stored magnetic energy is converted into electrical energy for release. In this case, the capacitor is in a discharging state, and Ic=IL-Ir. The change value of voltage of the capacitor satisfies: C*△Uc =(IL-Ir)*Toff. After the time Toff, T1 is turned on again. The foregoing process is repeated until the equalization of the battery clusters is implemented during charging. Theoretically, during the turn-off and turn-on of the transistor T2, the change values about the increase and decrease of the inductor current should be the same, that is, Vs*Ton = (Vr-Vs)*Toff, and the values about the increase and decrease of the capacitor voltage should also be the same, that is, Ic*Ton= (IL-Ir)*Toff. Therefore, during discharging, the cluster equalization voltage Vs=(1-D)*Vr and the cluster current Ir=(1-D)*IL can be obtained, where D=Ton/(Ton+Toff).

FIGs. 6a to 6d are schematic diagrams of a current flow of a DCDC circuit in a charge and discharge mode according to another embodiment of the present invention. As shown in the figure, the first DCDC circuit may be of a boost structure, including N-MOS transistors T1 and T2, capacitors Cr and Cs, inductor L, and diodes D1 and D2.

In the charge mode, T2 is turned off, as shown in FIG. 6a, and when the battery system starts charging, T1 is turned on. In this case, after flowing through the inductor L and T1, the cluster current Ir flows towards the battery pack and the battery bus. The current IL in the inductor L gradually increases by ΔIL. The change value in inductor current satisfies the following formula: L*ΔIL = Vr*Ton, where the self-induced potential generated across two ends of L impedes the current increase, making L convert electrical energy into magnetic energy and store it. Furthermore, when the capacitor Cr is in a charging state after the time of Ton, the transistor T1 is turned off. As shown in FIG. 6b, the self-induced potential generated across two ends of the inductor impedes the current decrease, enabling D2 to be forward biased and turned on. This allows the current in the inductor to flow through D2 for supplying power to the load, that is, the pack equalizer. The current gradually decreases, and its change value satisfies the following formula: L*ΔIL = (Vs-Vr)*Toff. The stored magnetic energy is converted into electrical energy and released to the load. In this case, the capacitor is in a discharging state. After the time Toff, T1 is turned on again. The foregoing process is repeated until the equalization of the battery clusters is implemented during charging. Theoretically, during the turn-off and turn-on of the transistor T 1, the change values about the increase and decrease of the inductor current should be the same, that is, Vr*Ton = (Vs-Vr) *Toff. Therefore, during charging, the cluster equalization voltage Vs= Vr/(1-D) and the cluster current Ir=IL can be obtained, where D = Ton/(Ton+Toff).

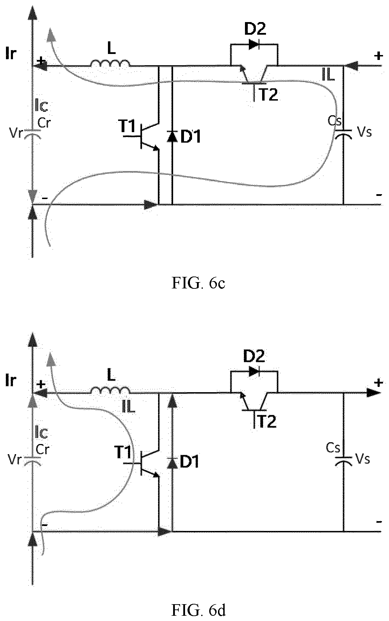

In the discharge mode, T1 is turned off, as shown in FIG. 6c, and when the battery system starts discharging, T2 is turned on. In this case, the discharge current of the battery flows through T2 and the inductor L, and then enters the battery packs or the battery bus. The current IL in the inductor L gradually increases by ΔIL. The change value in the inductor current satisfies the following formula: L*△IL=(Vs-Vr)*Ton, where the self-induced potential generated across two ends of L impedes the current increase, making L convert electrical energy into magnetic energy and store it. Furthermore, the capacitor Cr is in a charging state. After the time of Ton, the transistor T2 is turned off. As shown in FIG. 6d, D2 is biased forward and turned on, allowing the discharge current of the battery to flow through D2 and inductor L, and then into the battery packs or battery bus. The inductor current gradually decreases, and its change value satisfies the following formula: L*△IL=Vr*Toff. The stored magnetic energy is converted into electrical energy for release. In this case, the capacitor is in a discharging state. After the time Toff, T2 is turned on again. The foregoing process is repeated until the equalization of the battery clusters is implemented during discharging. Theoretically, during the turn-off and turn-on of the transistor T2, the change values about the increase and decrease of the inductor current should be the same, that is, (Vs-Vr)*Ton = Vr*Toff. Therefore, during discharging, the cluster equalization current Vs=Vr/D and the cluster current Ir=IL can be obtained, where D=Ton/(Ton+Toff).

It should be understood that in other embodiments of the present invention, other bidirectional boost/buck or buck-boost circuits may be employed, which is not limited to the bidirectional half-bridge circuit structure shown in the figure. The second DCDC circuit may be an isolation circuit, including but not limited to a dual-active bridge circuit, a series resonant circuit, or an LLC circuit.

In the normal mode, as described earlier, the equalization management of the battery system includes:
controlling, during charging, a cluster equalizer to absorb power from a battery bus via a first end of the cluster equalizer, and controlling the pack equalizer to absorb power from a second end of the cluster equalizer and sending the power to the battery pack; and
controlling, during discharging, a pack equalizer to absorb power from a battery pack via a first end of the pack equalizer; and controlling the cluster equalizer to absorb power from a second end of the pack equalizer and sending the power to the battery bus.

When it is necessary to replace some battery packs, the control module needs to determine the charging and discharging logic of the cluster equalizer and pack equalizer based on the state of charge of the battery packs.

According to the battery system and an equalization management method thereof provided by the present invention, the pack equalizers are provided between the battery packs to regulate the equalization between battery packs in each cluster, and cluster equalizers are connected to the battery clusters to regulate the equalization between the battery clusters. The use of such equalization scheme allows for low voltage of the cluster equalizer and the current is cluster current, and therefore, functions can be implemented by using small power DCDC circuits of low voltage semiconductor devices. Compared with the high voltage DCDC in the related art, the low power DCDC features low cost, small size, light weight, and low loss. In such case, based on the similar principle, the pack equalizer is also a low-power DCDC formed by low-voltage semiconductor devices, which features low cost, small size, light weight, and low loss. In addition, the battery system only needs to boost the voltage of the cluster equalizer, so as to increase the Vbus voltage of the power conversion system, which in turn enables it to operate at a higher grid voltage and increases the power of the power conversion system.

Although various embodiments of the present invention are described above, it should be understood that they are presented only as examples and not as limitations. It is evident to those skilled in the art that various combinations, modifications, and changes can be made without departing from the spirit and scope of the present invention. Therefore, the breadth and scope of the present invention disclosed herein should not be limited by the exemplary embodiments disclosed above, but should be defined solely by the appended claims and their equivalents.

## Claims

1. A battery system, comprising a plurality of parallel-connected battery clusters, wherein the battery cluster is connected to a power conversion system via a battery bus, and any one of the battery clusters comprises:
a plurality of series-connected battery packs;
pack equalizers, in one-to-one correspondence with the battery packs, each having a first end connected to two terminals of a corresponding battery pack and a second end connected to a power source; and
cluster equalizers each having a first end connected to the battery pack in series and a second end connected to a power source.

2. The battery system according to claim 1, wherein the power source is a grid or a generator.

3. The battery system according to claim 1, wherein the power source is a battery or a supercapacitor.

4. The battery system according to claim 1, wherein the power source is a current cluster of batteries.

5. The battery system according to claim 4, wherein in any one of the battery clusters, positive and negative electrodes of the second end of the pack equalizer are correspondingly connected to positive and negative electrodes of the second end of the cluster equalizer.

6. The battery system according to claim 1, wherein the cluster equalizer comprises a first DCDC circuit and a battery-cluster power-distribution device.

7. The battery system according to claim 6, wherein the pack equalizer comprises a second DCDC circuit and a battery-pack power-distribution device.

8. The battery system according to claim 7, wherein a bidirectional boost/buck or buck-boost circuit is used as the first DCDC circuit, and/or an isolation circuit is used as the second DCDC circuit.

9. The battery system according to claim 1, further comprising a control module, wherein the control module comprises:
a power detection apparatus configured to be capable of measuring states of charge of each battery pack and battery cluster; and
a controller configured to be capable of determining charge and discharge logic of the pack equalizer and cluster equalizer according to the state of charge of the battery pack.

10. An equalization management method of battery system, comprising:
controlling, during charging, a cluster equalizer to absorb power from a battery bus via a first end of the cluster equalizer, and controlling the pack equalizer to absorb power from a second end of the cluster equalizer and sending the power to the battery pack; and
controlling, during discharging, a pack equalizer to absorb power from a battery pack via a first end of the pack equalizer; and controlling the cluster equalizer to absorb power from a second end of the pack equalizer and sending the power to the battery bus.
